(19) Europäisches Patentamt / European Patent Office / Office européen des brevets

(11) **EP 4 501 881 A1**

(12) **EUROPEAN PATENT APPLICATION**
published in accordance with Art. 153(4) EPC

(43) Date of publication:
05.02.2025 Bulletin 2025/06

(21) Application number: 23774206.9

(22) Date of filing: 17.01.2023

(51) International Patent Classification (IPC):
*C04B 14/38* [(2006.01)]  *C04B 28/02* [(2006.01)]
*B28C 5/40* [(2006.01)]

(52) Cooperative Patent Classification (CPC):
C04B 14/38; C04B 28/02; B28C 5/40

(86) International application number:
PCT/JP2023/001182

(87) International publication number:
WO 2023/181605 (28.09.2023 Gazette 2023/39)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 25.03.2022 JP 2022049673
12.07.2022 JP 2022111541

(71) Applicant: Teijin Limited
Osaka 530-0005 (JP)

(72) Inventor: NYUI, Shingo
Osaka-shi, Osaka 530-0005 (JP)

(74) Representative: Carpmaels & Ransford LLP
One Southampton Row
London WC1B 5HA (GB)

(54) **CARBON-FIBER-CONTAINING CONCRETE OR MORTAR COMPOSITION, CARBON-FIBER-REINFORCED CONCRETE OR MORTAR STRUCTURE, AND PRODUCTION METHOD THEREFOR**

(57) Purposes of the present invention are to provide a carbon-fiber-containing concrete or mortar composition which has excellent handleability due to a reinforcement produced from precut raw-material carbon fibers, such as short fibers, scrap fibers resulting from processes, or carbon fibers reclaimed from CFRPs, etc., and to provide a carbon-fiber-reinforced concrete or mortar structure which is a cured object formed from the carbon-fiber-containing concrete or mortar composition and in which the fibers have a high reinforcing effect. This carbon-fiber-containing concrete or mortar composition includes carbon-fiber masses each configured at least from carbon fibers and a binder, and is characterized in that the carbon-fiber masses each have the shape of a spindle.

Fig. 2

EP 4 501 881 A1

## Description

FIELD

The present disclosure relates to a concrete or mortar composition containing spindle-shaped carbon fiber aggregates, as well as a reinforced concrete or mortar structure thereof, and a production method therefor. In particular, it relates to a concrete or mortar composition containing spindle-shaped carbon fiber aggregates made from recycled carbon fibers, as well as a reinforced concrete or mortar structure thereof, and a production method therefor.

BACKGROUND

Concrete or mortar structures comprising cement as a main component are used in large quantities in the fields of architecture and civil engineering because of their excellent properties such as compressive strength, durability, and nonflammability, as well as their low cost. However, those structures, even when containing construction aggregates such as sand or gravel, basically, have brittle physical properties and have the disadvantages that they are likely to crack or break when stress such as tension, bending, or flexing is applied thereto.

Thus, in order to compensate for these disadvantages, in addition to various conventional construction aggregates, fiber-reinforced plastic wire (FRP wire) using steel fibers, synthetic fibers, aramid fibers, or glass fibers are used as reinforcing materials in some cases. This allows the resultant cement composite materials (reinforced concrete or mortar structures) to have greatly improved mechanical properties, such as the bending strength and bending toughness, of cement composite materials (reinforced concrete or mortar structures).

Carbon fibers have excellent specific strength and specific modulus and are lightweight, and are therefore used as reinforcing fibers for various materials. Furthermore, as reinforcing fibers used in the cement composite materials, they are also used in the fields of architecture and civil engineering because they undergo relatively little deterioration in alkali. In particular, many methods for using, in the cement composite materials, a composite wire material produced from a carbon fiber reinforced plastic (CFRP) using carbon fibers which are continuous fibers have been studied.

For example, Patent Literature 1 to 3 each describe a cement composite material using a composite wire material obtained by attaching a resin matrix or an inorganic matrix as an alternative to the resin matrix onto continuous carbon fibers, curing, and thereafter cutting the cured continuous carbon fibers. However, these methods, in which the continuous fibers are subjected to curing treatment and thereafter cut, cannot be applied to pre-cut short fibers, fibers as process edge materials, or recycled carbon fibers recovered from CFRP. Further, the production energy or cost of the curing treatment step may become a problem.

When using pre-cut carbon fibers as reinforcing materials as-is, in which case they have not been subjected to curing treatment, they can easily be dispersed into single fibers when kneading with a concrete composition. When dispersed into single fibers, there are problems that the dispersed single fibers may break due to contact with construction aggregates, and that the material viscosity increases during kneading, resulting in a decrease in handleability. Furthermore, there are problems in that the reinforcing effect such as bending toughness is reduced.

Patent Literature 4 describes a cement composite material reinforced with carbon fibers having an average fiber length of 3 mm or less. Though the probability of breakage of the dispersed single fibers is low since the average fiber length is short, it is expected that the reinforcing effects such as bending strength and bending toughness of the resulting cement composite material will be small. Furthermore, due to the increase in material viscosity, the characteristic values of the mortar composition before curing, such as slump and fluidity, are reduced.

[CITATION LIST]

[PATENT LITERATURE]

[Patent Literature 1] Japanese Patent No. 5046276
[Patent Literature 2] Japanese Patent No. 5054906
[Patent Literature 3] Japanese Patent No. 5182779
[Patent Literature 4] Japanese Patent No. 5809019

SUMMARY

[TECHNICAL PROBLEM]

An object of the present disclosure is to provide a carbon fiber-containing concrete or mortar composition having excellent handleability, using as a raw material a reinforcing material made from pre-cut carbon fibers, such as short fibers, fibers as process edge materials, and recycled carbon fibers recovered from CFRP, and to provide a carbon fiber-reinforced concrete or mortar structure having a high fiber reinforcing effect, which is a cured product thereof.

Furthermore, the present disclosure aims to provide a method for the production of a carbon fiber-reinforced concrete or mortar structure.

[SOLUTION TO PROBLEM]

The problems described above can be solved by the following aspects of the present invention:

<Aspect 1>
A carbon fiber-containing concrete or mortar composition, comprising carbon fiber aggregates each composed of at least carbon fibers and a binder, wherein
the carbon fiber aggregates have a spindle shape.
<Aspect 2>
The carbon fiber-containing concrete or mortar composition according to Aspect 1, wherein an average length of the spindle-shaped carbon fiber aggregates is 1.5 mm to 60 mm.
<Aspect 3>
The carbon fiber-containing concrete or mortar composition according to Aspect 1 or 2, wherein an average maximum width of the spindle-shaped carbon fiber aggregates is 0.1 mm to 3.0 mm.
<Aspect 4>
The carbon fiber-containing concrete or mortar composition according to any one of Aspects 1 to 3, wherein an average length of the carbon fibers is 1 mm or more and less than 30 mm.
<Aspect 5>
The carbon fiber-containing concrete or mortar composition according to Aspect 4, wherein the average length of the carbon fiber aggregates is 1.2 to 5.0-fold the average length of the carbon fibers contained in the carbon fiber aggregates.
<Aspect 6>
The carbon fiber-containing concrete or mortar composition according to any one of Aspects 1 to 5, wherein a content of the binder is 0.1 to 10 wt% relative to the spindle-shaped carbon fiber aggregate.
<Aspect 7>
The carbon fiber-containing concrete or mortar composition according to any one of Aspects 1 to 6, wherein the carbon fibers include recycled carbon fibers.
<Aspect 8>
The carbon fiber-containing concrete or mortar composition according to any one of Aspects 1 to 7, wherein the carbon fibers are recycled carbon fibers.
<Aspect 9>
The carbon fiber-containing concrete or mortar composition according to Aspect 7 or 8, wherein the recycled carbon fibers include a residual carbon component, and a content of the residual carbon component is greater than 0 wt% and 5.0 wt% or less relative to the recycled carbon fibers.
<Aspect 10>
A carbon fiber-reinforced concrete or mortar structure obtained by curing the composition according to any one of Aspects 1 to 9.
<Aspect 11>
A method for the production of a carbon fiber-reinforced concrete or mortar structure, comprising:
producing spindle-shaped carbon fiber aggregates each composed of at least carbon fibers and a binder.
<Aspect 12>
The method according to Aspect 11, wherein the carbon fibers include recycled carbon fibers.
<Aspect 13>
The method according to Aspect 11 or 12, wherein the carbon fibers are recycled carbon fibers.
<Aspect 14>
The method according to Aspect 12 or 13, comprising producing the recycled carbon fibers by decomposing a plastic component contained in a carbon fiber-containing plastic product by thermal activation of semiconductors method.

[ADVANTAGEOUS EFFECTS OF INVENTION]

According to the present invention, there can be provided a carbon fiber-containing concrete or mortar composition having excellent handleability, using as a raw material a reinforcing material made from pre-cut carbon fibers, such as short fibers, fibers as process edge materials, and recycled carbon fibers recovered from CFRP, and there can be provided a carbon fiber-reinforced concrete or mortar structure having a high fiber reinforcing effect, which is a cured product thereof, as well as a production method therefor.

BRIEF DESCRIPTION OF DRAWINGS

FIG. 1 is a schematic view of an embodiment of a stirring granulator which can be used in the present disclosure.
FIG. 2 is a photograph of a plurality of carbon fiber aggregates according to Example 1.
FIG. 3 is a photograph of one carbon fiber aggregate according to Example 1.
FIG. 4 is a photograph of a plurality of carbon fiber aggregates according to Example 2.

DESCRIPTION OF EMBODIMENTS

The concrete or mortar composition according to the present disclosure comprises:
carbon fiber aggregates each composed of at least carbon fibers and a binder, and is characterized by:
comprising spindle-shaped carbon fiber aggregates.
The concrete or mortar composition according to the present disclosure comprises spindle-shaped carbon fiber aggregates. Though not to be bound by theory, it is believed that since spindle-shaped carbon fiber aggregates are produced by a rolling granulation method, stirring granulation method, or the like, during which the carbon fibers are subjected to stress in a certain direction such as centrifugal force, the single fibers are tightly secured by the binder in a bundled state during arrangement thereof in a certain direction. Thus, it is thought that the aggregates are unlikely to be unbundled during kneading with a concrete composition or the like, whereby dispersion into single fibers can be suppressed.
Furthermore, the concrete or mortar structure according to the present disclosure is preferably reinforced with spindle-shaped carbon fiber aggregates having an average length of 1.5 mm to 60 mm. A feature of the spindle-shaped carbon fiber aggregate is that even if the length of the pre-cut carbon fiber used as a raw material is less than 1.5 mm, it can be extended as the average length of the carbon fiber aggregate. Thus, as a reinforcing material, the carbon fiber aggregates can have an increased securing force with the concrete structure, making it unlikely for the reinforcing material to pull out from the base material concrete structure in response to tensile stress, resulting in suitable reinforcement efficiency.
Specifically, it was discovered that spindle-shaped carbon fiber aggregates using pre-cut carbon fibers as a raw material have excellent properties as a reinforcing material for concrete structures, whereby the present disclosure can provide a cement composite material with a high fiber reinforcement effect.
The invention according to the present disclosure will be described in more detail below.

<Carbon Fiber Aggregate>

The carbon fiber aggregate according to the present disclosure is an aggregate composed of at least carbon fibers and a binder. In the carbon fiber aggregate, single fibers thereof are bound together by the binder.
The amount of binder in the carbon fiber aggregate is preferably, relative to the carbon fiber aggregate, 0.1 wt% to 10 wt%, and in particular may be 0.5 wt% to 8 wt% or 1 wt% to 6 wt%. When the amount of the binder is less than 0.1 wt%, the carbon fiber aggregates are easily unbundled to be dispersed into the single fibers when kneading with a concrete composition, etc., which is not preferable because of breakage of the single fibers and an increase in the material viscosity during kneading, which may result in a reduction in handleability of the aggregates.
Furthermore, when the amount of binder exceeds 10 wt%, in which case the weight ratio of the carbon fibers constituting the carbon fiber aggregate is reduced, there is a tendency that suitable reinforcement efficiency cannot be obtained when comparing the aggregates added at the same amount.
The carbon fiber aggregate according to the present disclosure has a spindle shape. Note that "spindle" shape means a shape that is thick at the center and gradually becomes thinner toward the ends.
As a particularly preferable embodiment of a method related to the present disclosure, a method for obtaining spindle-shaped carbon fiber aggregates using a stirring granulation method will be described later. As a similar method, a method for obtaining spindle-shaped carbon fiber aggregates using a rolling granulation method, reference may be made to, for example, the description in Japanese Patent No. 3452363.

(Average Length of Aggregates)

The average length of the carbon fiber aggregates may be 1.5 mm to 60 mm. The average length of the aggregates is preferably 5 mm or more, 10 mm or more, 15 mm or more, 20 mm or more, or 25 mm or more, and/or preferably 55 mm or less, 50 mm or less, 45 mm or less, or 40 mm or less. When the average length of the carbon fiber aggregates is less than 1.5 mm, the securing force with concrete structures, etc., is small, which is not preferable because the aggregates are likely to pull out from the concrete structure, etc. as a base material in response to tensile stress, making it impossible to obtain suitable reinforcement efficiency.

Furthermore, when the average length of the carbon fiber aggregates is greater than 60 mm, it may become difficult to mix the aggregates uniformly into the concrete composition. Furthermore, by the aggregates becoming entangled during kneading, it may become difficult to disperse them evenly in the concrete composition.

The average length of the carbon fiber aggregates is determined by visually measuring the length of 50 carbon fiber aggregates in the long axis direction using a caliper, or in images captured with a digital camera or optical microscope, and averaging the measured values.

The average length of the carbon fiber aggregates is preferably 1.2 to 5.0-fold the average length of the carbon fibers contained in the carbon fiber aggregates. When the average length of the carbon fiber aggregates is within the above range, suitable reinforcement efficiency can be obtained.

The average length of the carbon fiber aggregates is particularly preferably 1.4-fold or more, 1.5-fold or more, or 1.6-fold or more the average length of carbon fibers, and/or 4.5-fold or less, 4.0-fold or less, 3.5-fold or less, 3.0-fold or less, or 2.5-fold or less. When the average length of the carbon fiber aggregates is within the above range, particularly suitable reinforcement efficiency may be obtained.

(Average Maximum Width of Aggregates)

The average maximum width of the carbon fiber aggregates may be 0.1 mm to 3.0 mm. The average length of the aggregates is preferably 0.2 mm or more, 0.3 mm or more, 0.4 mm or more, or 0.5 mm or more, and/or preferably 2.8 mm or less, 2.6 mm or less, 2.4 mm or less, 2.2 mm or less, or 2.0 mm or less. The average maximum width of the carbon fiber aggregates is the largest average length (width) in the direction perpendicular to the length direction. When the average maximum width of the carbon fiber aggregates is less than 0.1 mm, the aggregates may break, and there will be many short aggregates having low securing force with concrete structures or the like, which is not preferable because suitable reinforcing efficiency cannot be obtained.

Furthermore, when the average maximum width of the carbon fiber aggregates is greater than 3.0 mm, the number of aggregates dispersed in the concrete structure or the like decreases when comparing the aggregates added at the same amount. As a result, the total surface area of contact of the aggregates with the concrete structure becomes smaller, whereby suitable reinforcement efficiency tends to not be obtained.

The average maximum width of carbon fiber aggregates is determined by visually measuring the length of 50 carbon fiber aggregates in the short axis direction using a caliper, or in images captured with a digital camera or optical microscope, and averaging the measured values.

(Aspect Ratio)

The aspect ratio of the aggregate may be 5 to 150. The aspect ratio of the aggregate is preferably 10 or more, 15 or more, 20 or more, 25 or more, or 30 or more, and/or 120 or less, 100 or less, 80 or less, or 60 or less. The aspect ratio of the carbon fiber aggregate is a value obtained by dividing the major axis of the spindle-shaped aggregate by the minor axis, and can be expressed as average length/average maximum width. As the degree of elongation increases, the aspect ratio increases. When the aspect ratio is less than 5, the total surface area of contact of the aggregates with a concrete structure or the like becomes small, whereby the securing force becomes small, making it impossible to obtain suitable reinforcing efficiency, which is not preferable.

When the aspect ratio is greater than 150, it may become difficult to achieve uniform mixing of the aggregates into a concrete composition, and the aggregate may break, whereby suitable reinforcing efficiency tends to not be obtained.

(Carbon Fibers)

Carbon fibers constitute the raw materials of the aggregate, and encompass ordinary carbon fibers (carbon fibers which are not recycled carbon fibers, so-called "virgin carbon fibers"), recycled carbon fibers, and mixtures thereof. The carbon fibers may be, for example, PAN-based carbon fibers or pitch-based carbon fibers.

Though the form of carbon fibers is not particularly limited, they may be in the form of a carbon fiber bundle composed of a plurality of single strands (filaments). The number of filaments constituting the carbon fiber bundle may be in the range of 1,000 to 80,000 or 3,000 to 50,000. Furthermore, the diameter of the filaments constituting the carbon fibers may be 0.1 μm to 30 μm, 1 μm to 10 μm, or 3 μm to 8 μm.

(Recycled Carbon Fibers)

Recycled carbon fibers include a carbon fiber component and a carbon component other than the carbon fiber component (particularly a residual carbon component). Conventionally, in recycled carbon fibers, the carbon component other than the carbon fiber component is attached to the surface of the carbon fiber component.

The recycled carbon fibers are not particularly limited, and may be, for example, recycled carbon fibers obtained by heat treating a carbon fiber-containing plastic product such as carbon fiber-reinforced plastic (CFRP).

The recycled carbon fibers are particularly preferably recycled carbon fibers obtained by the thermal activation of semiconductors method. A particularly preferable embodiment of the method described below according to the present disclosure includes decomposing a plastic component contained in a carbon fiber-containing plastic product by the thermal activation of semiconductors method to produce the recycled carbon fibers.

Note that the "thermal activation of semiconductors method" (TASC method) is a method of decomposing a compound to be decomposed such as a polymer by utilizing the thermal activation of semiconductors (Thermal Activation of Semi-Conductors, TASC). Regarding the method of producing recycled carbon fibers by decomposing a plastic component contained in a carbon fiber-containing plastic product by the thermal activation of semiconductors method, reference can be made to, for example, the descriptions in Japanese Patent No. 4517146 and Japanese Unexamined Patent Publication (Kokai) No. 2019-189674.

The carbon fiber component in the recycled carbon fibers may be modified by being subjected to heat treatment or the like during the production process of the recycled carbon fibers. Regarding the details of the carbon fiber component in recycled carbon fibers, reference can be made to the descriptions regarding the carbon fibers above.

The residual carbon component in the recycled carbon fibers generally originates from the resin contained in the carbon fiber-containing plastic product used as a raw material when producing the recycled carbon fibers. In general, during the heat treatment process of carbon fiber-containing plastic products, the plastic components are thermally decomposed and residual carbon remains on the surface of the carbon fiber components.

In the present disclosure, a content of the residual carbon component is preferably greater than 0 wt% and 5.0 wt% or less relative to the recycled carbon fibers. In this case, it may be possible to obtain an aggregate having improved reinforcement efficiency.

Though not to be bound by theory, it is believed that in the case in which a content of the residual carbon component is greater than 0 wt% and less than 5.0 wt%, there is relatively little carbon content (in particular, charcoal) which can act as a foreign substance inhibiting the bundling of the single fibers during arrangement thereof along a certain direction when producing the spindle-shaped carbon fiber aggregates. Thus, aggregates having undergone a firm securing by the binder can be obtained, whereby the aggregates are unlikely to be unbundled at the time of kneading with a concrete composition or the like, and dispersion into single fibers can be suppressed.

A content of the residual carbon component is preferably 4.0 wt% or less, 3.0 wt% or less, or 2.0 wt% or less relative to the recycled carbon fibers. It is preferable that the residual carbon component be reduced to the greatest extent possible, and it may be 0.1 wt% or more, 0.2 wt% or more, 0.4 wt% or more, 0.6 wt%, 0.8 wt% or more, 1.0 wt% or more, or 1.2 wt% or more.

The content of the residual carbon component in the recycled carbon fibers can be measured by thermogravimetric analysis (the TGA method).

The residual carbon component can be measured by thermogravimetric analysis by the following procedure:

(i) Thermogravimetric analysis including the following steps is conducted over a total of approximately 600 minutes on a sample of 1 to 4 mg obtained by crushing the recycled carbon fibers in a thermogravimetric analyzer using an air supply rate of 0.2 L/min, a heating rise rate of 5-°C/min, and a recording speed of 1/6 s:

the temperature is raised from room temperature to 100-°C,
the temperature is held at 100-°C for 30 minutes,
the temperature is raised from 100-°C to 400-°C, and
the temperature is held at 400-°C for 480 minutes; and

(ii) The amount of residual carbon is calculated by identify the inflection point of the slope in a graph plotting the weight loss rate against time, and subtracting the weight loss rate during the holding period at 100-°C from the weight loss rate value at the inflection point.

If the inflection point of the slope cannot be identified under the above conditions, instead of holding at 400-°C for 480 minutes, the sample may be held at a specific temperature within the range of higher than 400-°C and below 500-°C for 480 minutes.

Furthermore, if the recycled carbon fiber contains a resin derived from a sizing agent or the like, the above measurement can be performed after removing the resin.

(Average Length of Carbon Fibers)

The carbon fibers can have an average length of 1 mm or more and less than 30 mm. Fibers having lengths in this range can be obtained by, for example, subjecting fibers having relatively long dimensions to a cutting treatment. The average length of the carbon fibers may be 2 mm or more, 3 mm or more, or 4 mm or more, and/or 29 mm or less, 28 mm or less, 27 mm or less, 26 mm or less, 25 mm or less, 24 mm or less, 23 mm or less, 22 mm or less, 21 mm or less, or 20 mm or less. In particular, the average length of the carbon fibers may be 8 mm to 25 mm or 9 mm to 20 mm.

When the average length of carbon fibers is 1 mm or more and less than 30 mm, it is considered that bundling of the single fibers is promoted during arrangement thereof along a certain direction, whereby the aggregates are unlikely to be unbundled when kneading with a concrete composition or the like, and dispersion into single fibers can be suppressed. Though not to be bound by theory, it is considered that when the average length of the raw material fibers is sufficiently long, the fibers tend to be oriented in one direction, whereby aggregates having a spindle shape can be obtained. Furthermore, it is considered that by setting the average length of the fibers sufficiently short, the fibers are prevented from becoming entangled with each other, and as a result, uniform orientation of the fibers is promoted.

The average length of carbon fibers can be calculated by visually measuring the length of 50 carbon fibers using a caliper, or in images captured with a digital camera or optical microscope, and averaging the measured values.

<<Method for Production of Spindle-Shaped Carbon Fiber Aggregates>>

The method for the production of spindle-shaped carbon fiber aggregates according to the present disclosure comprises:

providing a mixture composed of at least carbon fibers and a binder-containing liquid (providing step);
producing a spindle-shaped precursor by rolling the mixture in a container (granulation step); and
drying the precursor (drying step).

Regarding each component related to the above production method, reference can be made to the above descriptions regarding the aggregates related to the present disclosure.

<Providing Step>

In the method according to the present disclosure, a mixture composed of at least carbon fibers and a binder-containing liquid is provided. The mixture is constituted in particular by carbon fibers and a binder-containing solution.

The amount of binder-containing liquid in the mixture is preferably 10 wt% to 70 wt%, particularly preferably 15 wt% to 60 wt%, or 20 wt% to 50 wt%. In this case, the fibers can be bundled particularly suitably due to the liquid contained in the binder. Furthermore, in this case, the load of the drying treatment can be reduced because the amount of liquid contained in the binder does not become excessive.

(Binder-Containing Liquid)

The binder-containing liquid is a binder dispersion liquid or a binder solution, and contains a binder and a solvent or a dispersion medium.

(Binder)

The binder has the role of bundling the carbon fibers in the aggregate and maintaining the shape of the aggregate. The binder is not particularly limited, and is preferably a thermoplastic resin or a thermosetting resin. More specific examples of the binder include epoxy resins, urethane-modified epoxy resins, vinyl ester resins, acrylic resins, polyester resins, phenol resins, polyamide resins, polyurethane resins, polycarbonate resins, polyetherimide resins, polyamideimide resins, polyimide resins, bismaleimide resins, polysulfone resins, polyethersulfone resins, epoxy-modified urethane resins, polyvinyl alcohol resins, and polyvinylpyrrolidone resins. These resins can be used alone or in combination of two or more thereof.

Examples of the binder can include bentonite, lignin sulfonate, molasses, carboxymethylcellulose, konjac powder, sodium alginate, polyacrylamide, polyvinyl acetate, polyvinyl alcohol, and starch. These can be used alone or in combination of two or more, and can also be used in combination with the resins described above.

(Solvent, Dispersion Medium)

The solvent or dispersion medium is not particularly limited as long as it is a liquid in which the binder can be dissolved or dispersed. Examples of the solvent or dispersion medium include water, alcohols (for example, methanol or ethanol), ketones (for example, methyl ethyl ketone or acetone), hydrocarbons (for example, cyclohexane, toluene, or xylene), halogenated hydrocarbons (for example, dichloromethane), amides (for example, N-methylpyrrolidone or dimethylformamide), and ethers (for example, tetrahydrofuran). The solvent or dispersion medium is particularly preferably water.

The binder-containing liquid used in the present disclosure can be prepared by, for example, further adding a solvent or dispersion medium to a relatively concentrated commercially available sizing agent composed of a binder and a solvent or dispersion medium. In particular, the binder-containing liquid can be prepared by adding a dispersion medium (in particular, water) to a sizing agent containing a binder and a dispersion medium (in particular, water).

The sizing agent (and the binder-containing liquid obtained by adding a solvent or dispersion medium to the sizing agent) may be, for example, in the form of an aqueous emulsion in which the binder is dispersed in water, and in particular, may be a water-based polyurethane.

The concentration of the binder in the sizing agent is not particularly limited, and may be, for example, 10 to 80 wt%, 20 to 60 wt%, or 30 to 50 wt%.

The amount of the binder may be, relative to the binder-containing liquid, 0.5 wt% or more, 1 wt% or more, 1.5 wt% or more, 2.0 wt% or more, or 3.0 wt%, and/or may be 20 wt% or less, 18 wt% or less, 16 wt% or less, 14 wt% or less, or 12 wt% or less. The amount of the binder is particularly preferably 1 wt% to 16 wt% or 2 wt% to 12 wt%, relative to the binder-containing liquid.

Furthermore, the amount of the binder is preferably 0.1 wt% to 10 wt%, and particularly preferably 0.5 wt% to 8 wt% or 1 wt% to 6 wt%, relative to the carbon fiber aggregate.

(Fiber Opening)

Fiber components, particularly carbon fibers, can be subjected to a fiber opening treatment in advance. By performing the fiber opening treatment, it may be possible to eliminate entanglement of the fibers to promote orientation of the fibers in one direction in the granulation step.

The carbon fibers that can be used to produce the spindle-shaped carbon fiber aggregates can be subjected to a fiber opening treatment in advance. By performing the fiber opening treatment, it may be possible to promote bundling of the single fibers while arranging them along a certain direction in the granulation step.

The method of the fiber opening treatment is not particularly limited, and can be performed using, for example, a rotating blade. The rotating blade for fiber opening may be an auxiliary blade installed in the granulator.

Furthermore, the fiber opening treatment can also be performed by high-speed stirring.

(Mixture)

In the method for the production of the spindle-shaped carbon fiber aggregates, the method for obtaining a mixture from the carbon fibers and the binder-containing liquid is not particularly limited. The carbon fibers and the binder-containing liquid can be introduced in the form of a mixture into the container to be used in the granulation step. For example, a mixture may be obtained by pouring the binder-containing liquid onto a mass of carbon fibers and stirring as desired, and this mixture may be poured into a container. Alternatively, the carbon fibers and the binder-containing liquid may be separately introduced into a container and mixed within the container to form a mixture. Mixing and granulation may be performed simultaneously.

The carbon fibers and the binder-containing liquid in the mixture need not necessarily be uniformly distributed within the mixture. The mixture can be stirred during the granulation step to improve uniformity.

<Granulation Step>

In the method for the production of the spindle-shaped carbon fiber aggregates according to the present disclosure, the spindle-shaped precursor is prepared by rolling the mixture in the container (hereinafter, this treatment may be referred to as the "granulation treatment").

The method of rolling the mixture in the container is not particularly limited, and any known method (in particular, known granulation methods) can be used.

In particular, the spindle-shaped precursor is produced by rolling the mixture in a clearance between the inner wall of the container and a rotating body within the container. Though not to be limited by theory, by rolling the mixture containing the carbon fibers and the binder-containing liquid in the clearance between the inner wall of the container and the rotating body within the container, it is believed that the fibers are bundled to each other via a binder while oriented in a specific direction, and as a result, the precursor having a spindle shape can be obtained particularly efficiently.

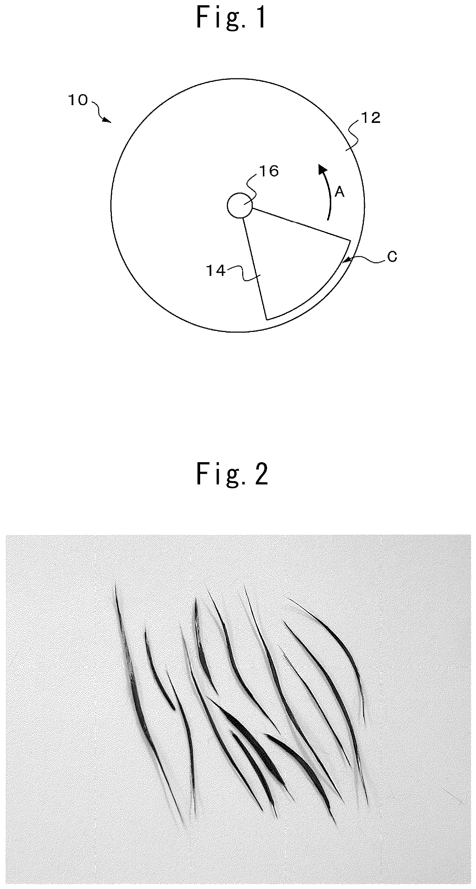

The method of rolling the mixture in the clearance between the inner wall of the container and the rotating body within the container is not particularly limited. An exemplary method therefor is described below with reference to FIG. 1.

FIG. 1 is a schematic view of an embodiment of a stirring granulator which can be used in the present disclosure. The stirring granulator 10 of FIG. 1 comprises a cylindrical container part 12 as a container and a stirring blade 14 as a rotating body. The stirring granulator 10 shown in FIG. 1 is horizontal, and in normal use, the opening of the container part 12 opens toward the side. FIG. 1 is a view looking into the interior of the container part. A shaft part 16 is attached to the inner wall of the container part 12 facing the opening (the wall on the back side in the above viewpoint). The shaft part 16 extends horizontally. The stirring blade 14 can rotate about this shaft part 16 (counterclockwise ("A") in the example of FIG. 1, but may also be clockwise). Specifically, the stirring blade 14 of FIG. 1 is configured to rotate in a plane parallel to the direction of gravity. Though not illustrated in FIG. 1, an auxiliary blade for fiber-opening can also be installed inside the container part 12.

In the granulation treatment, the mixture containing the carbon fibers and the binder-containing liquid is mixed and stirred as desired by the stirring blade 14 rotating in the container part 12, and is rolled in the clearance (indicated by the symbol "C" in FIG. 1) between the inner wall of the container part 12 and the stirring blade 14 within the container part 12.

The granulation treatment can be carried out at ambient temperature or with heating. The granulation treatment can be carried out for, for example, 1 minute to 1 hour, 5 minutes to 20 minutes, or 8 minutes to 15 minutes.

(Container)

The container of the present disclosure is not particularly limited as long as it is suitable for holding a mixture therein and for performing the above-described granulation treatment on the mixture. Preferably, the container is composed of a material having excellent rigidity and durability. In particular, it is preferable that the inner wall of the container be composed of a material that does not cause wear during rolling of the mixture, or that the inner wall be subjected to a surface treatment for this purpose.

In an embodiment according to the present disclosure, the container is not inclined and is substantially parallel to the horizontal direction. For example, the portion of the inner wall of the container located lower in the direction of gravity may not be inclined but may be substantially parallel to the horizontal direction.

(Rotating Body)

The rotating body is configured to be able to roll the mixture containing the carbon fibers and the binder-containing liquid between itself and the inner wall of the container by rotating within the container. The rotating body is, for example, attached to a shaft part installed in the container, and is configured to be able to rotate about the shaft part.

The rotating body preferably has the form of a blade. The rotating body is particularly preferably a stirring blade. It is preferable that the stirring blade be composed of a material having excellent rigidity and durability, and in particular, it is preferably composed of a material that does not cause wear during rolling of the mixture, or is subjected to a surface treatment for this purpose.

(Clearance)

The size of the clearance between the inner wall of the container and the rotating body, i.e., the distance between the inner wall of the container and the rotating body, may be constant, or may vary continuously or discontinuously.

The size of the clearance between the inner wall of the container and the rotating body within the container, i.e., the distance between the inner wall of the container and the rotating body, can be set as appropriate depending on the desired size of the carbon fiber aggregate, and may be, for example, 1 to 10 mm.

(Stirring Granulator)

A known stirring granulator can be used as the device having the above container and rotating body. The stirring granulator is not particularly limited, and for example, a Henschel granulator (Henschel mixer), a bag mill granulator, or an Eirich stirring granulator can be used. Both vertical and horizontal stirring granulators can be used.

(Spindle-Shaped Precursor)

The spindle-shaped precursor contains the carbon fibers and the binder, and also contains liquid (in particular, water) derived from the binder-containing liquid. In the drying step described below, the liquid (in particular, water) in the precursor can be removed.

<Drying Step>

In the method for the production of the spindle-shaped carbon fiber aggregates according to the present disclosure, the obtained spindle-shaped precursor is dried.
The method of drying the precursor is not particularly limited, and the temperature conditions, time conditions, etc., can be appropriately determined in accordance with the moisture content of the obtained precursor.

<<Carbon Fiber-Containing Concrete or Mortar Composition>

The mortar composition according to the present disclosure can be obtained by adding water to the spindle-shaped carbon fiber aggregates, cement, a fine construction aggregate such as sand, and an admixture, and kneading these materials. The concrete composition is obtained by kneading these raw materials with a coarse construction aggregate such as gravel. Various additives and other raw materials may be added to such concrete or mortar composition for the purpose of improving physical properties depending on the intended use.

<Addition Rate of Carbon Fibers>

Though the addition rate (content rate) of the carbon fibers constituting the spindle-shaped carbon fiber aggregate according to the present disclosure can be selected depending on the application, it is preferably 0.01 to 10% by volume, and in particular, may be 0.05 to 5% by volume, 0.1 to 3% by volume, or 0.2 to 1.5% by volume relative to the total amount of the concrete or mortar composition. Furthermore, the spindle-shaped carbon fiber aggregate according to the present disclosure and existing reinforcing fiber materials can be used in combination. When the addition rate of the carbon fibers is less than 0.01% by volume, suitable reinforcing efficiency cannot be obtained, which is not preferable.
Furthermore, when the addition rate of the carbon fibers exceeds 10% by volume, it may become difficult to uniformly mix the aggregates into a concrete composition or the like. Furthermore, by the aggregates becoming entangled during kneading, it may become difficult to disperse them uniformly in the concrete composition or the like. This is not preferable because the viscosity of the concrete composition may increase, whereby the handleability of the composition may deteriorate.

<Carbon Fiber Aggregate Addition Method>

Examples of the method for adding the spindle-shaped carbon fiber aggregates according to the present disclosure to a concrete composition include a method in which the aggregates and materials such as cement, a fine construction aggregate, and a coarse construction aggregate, are formed into a dry premix, and then water is added, which is followed by kneading, and a method in which materials such as cement, a fine construction aggregate, and a coarse construction aggregate and water are thoroughly stirred, and then the aggregates are added thereto, which is followed by kneading.
As the mixer for kneading, a pan mixer, a tilting mixer, an omni mixer, a Hobart mixer, or a truck mixer can be used.

<<Carbon Fiber-Reinforced Concrete or Mortar Structure>>

The concrete or mortar structure according to the present disclosure can be produced by curing the concrete or mortar composition obtained as described above. In these structures, carbon fibers may be present in the form of the spindle-shaped carbon fiber aggregates according to the present disclosure, and some or all of the aggregates may be unbundled to be dispersed into single fibers or fiber bundles. In the method for the production of these structures, by using the carbon fiber aggregates for kneading with the concrete composition, even if the carbon fibers are dispersed into single fibers or fiber bundles during production, a structure in which the carbon fibers are uniformly dispersed with relatively little breakage can be obtained.
The method for curing the concrete or mortar composition is not particularly limited, and the curing method and conditions can be appropriately determined in accordance with the type of structure, construction condition, location condition, environmental condition, etc. For example, the structure may be used in construction or repair techniques such as 3D printing, coating, injection, filling, plastering, and spraying.

EXAMPLES

The present invention will be described in more detail below using Examples. Note that the Examples are illustrative, and the present application is not limited thereto.

<< Example 1>>

<Material Preparation>

(Carbon Fibers)

As the carbon fibers, recycled carbon fibers having an average single fiber diameter of 6.7 $\mu$m, a single fiber tensile strength of 5.3 GPa, a Weibull shape factor of 7.6, and a residual carbon content of 1.4 wt% obtained by the thermal activation of semiconductors method were used.

(Single Fiber Tensile Strength)

Single fiber tensile strength was measured in accordance with JIS R7606 as follows:

at least 30 single fibers were collected from a fiber bundle,
the diameter of each of the single fibers was measured in the side image of each of the single fibers captured with a digital microscope, and the cross-sectional area thereof was calculated,
the sampled single fibers were each secured to a perforated mount using an adhesive,
the mount to which each of the single fibers was secured was attached to a tensile testing machine, and a tensile test was performed at a sample length of 10 mm and a strain rate of 1 mm/min to measure the tensile breaking stress,
the tensile strength was calculated from the cross-sectional area and tensile breaking stress of the single fiber, and
the average tensile strength of the at least 30 single fibers was defined as the single fiber tensile strength.

(Weibull Shape Factor)

The Weibull shape factor was calculated according to the following formula:

$$\mathrm{lnln}\{1 / (1 - F)\} = m \times \mathrm{ln}\sigma + C$$

where F is the fracture probability determined by the symmetric sample cumulative distribution method, $\sigma$ is the single fiber tensile strength (MPa), m is the Weibull shape factor, and C is a constant.
A Weibull plot was made using lnln{1 / (1 - F)} and ln$\sigma$, and the Weibull shape factor m was determined from the linearly approximated slope.

(Residual Carbon Amount)

The amount of residual carbon component in the recycled carbon fibers was determined by thermogravimetric analysis (TGA method) as follows:

(i) A 4 mg sample obtained by crushing the recycled carbon fibers was subjected to thermogravimetric analysis, including steps of raising the temperature from room temperature to 100-°C, holding at 100-°C for 30 minutes, raising the temperature from 100-°C to 400-°C, and holding at 400-°C for 480 minutes, over a total of approximately 600 minutes using a thermogravimetric analyzer at an air supply rate of 0.2 L/min, a heating rise rate of 5-°C/min, and a recording speed of 1/6 s; and
(ii) identifying the inflection point of the slope in a graph plotting the weight loss rate against time, and subtracting the weight loss rate during the holding period at 100-°C from the weight loss rate value at the inflection point to calculate the amount of residual carbon.

(Average Length of Carbon Fibers)

Recycled carbon fibers cut to an average length of 15 mm were used.

(Binder-Containing Liquid)

A binder-containing liquid (water emulsion sizing agent) containing 10.2 g of a urethane resin as a binder and 255 g of water as a dispersion medium was prepared.

(Granulation Treatment)

A vertical stirring granulator (30 L MTI mixer, manufactured by Tsukishima Kikai Co., Ltd.) was used in the granulation treatment.

The stirring granulator had a stirring blade and also had an auxiliary blade to promote fiber opening.

At the same time as the start of rotation of the stirring blade, 500 g of the recycled carbon fibers and 265 g of the binder-containing liquid were introduced into the container part of the stirring granulator, and mixed and granulation-treated at ambient temperature for 10 minutes, whereby a spindle-shaped precursor was obtained.

The moisture content in the mixture was 33.3 wt%. The rotation speed of the stirring blade was 290 rpm, and the rotation speed of the auxiliary blade was 5,000 rpm.

(Drying Treatment)

The obtained precursor was dried in a dryer to obtain the carbon fiber aggregates according to Example 1.

(Aggregates)

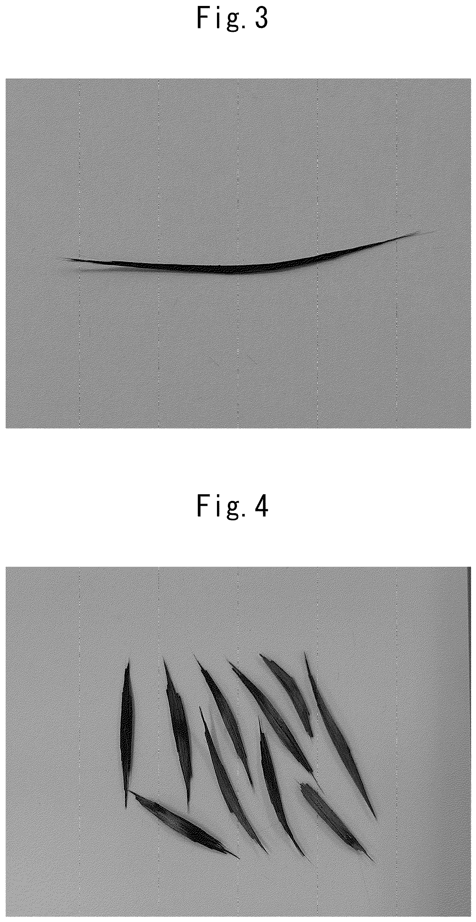

FIGS. 2 and 3 are photographs of the carbon fiber aggregates according to Example 1. As seen in these figures, the carbon fiber aggregates according to Example 1 had a spindle shape.

(Binder Content)

The content of binder in the aggregate of Example 1 was 2.0 wt%.

(Average Length and Average Maximum Width)

50 samples (N=50) were measured using a caliper, and the average length of the carbon fiber aggregates according to Example 1 was 32.8 mm, and the average maximum width thereof was 0.9 mm. Since the average length of the recycled carbon fibers was 15 mm, the average length of the carbon fiber aggregates was 2.2-fold the average length of the recycled carbon fibers.

(Aspect Ratio)

The aspect ratio (major axis/minor axis) of the aggregates of Example 1 was calculated. The major axis is the length of the aggregates, and the minor axis is the maximum width of the aggregates. From the above measured values, the average value was calculated for the 50 samples (N=50), and the aspect ratio was 36.

<Production of Carbon Fiber-Containing Mortar Composition>

(Preparation of Raw Mortar Composition)

9.0 g of the carbon fiber aggregates according to Example 1, along with 1265 g of low-heat Portland cement (manufactured by Taiheiyo Cement Corporation), 569 g of a fine construction aggregate (No. 6 silica sand, manufactured by San-ei Silica Co., Ltd.), 4.5 g of an admixture (water reducing agent Master Glenium SP8HU, manufactured by BASF Corporation), and 380 g of water, was kneaded with one another for approximately 3 minutes at a stirring speed of 140 rpm using a mortar mixer (5 L MIC-362 manufactured by Marui Corporation).

The addition rate of the carbon fibers in the obtained raw mortar composition was 0.5% by volume. The water/cement ratio was 30.0 wt% and the fine construction aggregate/cement ratio was 45.0 wt%.

(Bundlability of Carbon Fibers After Kneading)

A small amount of the raw mortar composition was skimmed and washed with water, and the extracted carbon fiber aggregates were visually observed. When the spindle-shaped carbon fiber aggregates were maintained and no cement infiltration between the single strands was observed, the bundlability was judged to be suitable. Conversely, when aggregates which were observed to be unbundled with cement infiltration between the single strands were 10 wt% or more of the total aggregates, the bundlability was judged to be poor. The results are shown in Table 1 below.

(Fluidity of Raw Mortar Composition)

A flow cone (a conical column having a hollowed-out interior with a height of 6 cm, a bottom inner diameter of 10 cm, and a top inner diameter of 7 cm) was arranged on a 50 cm square aluminum plate oriented horizontally, the raw mortar composition was poured into the flow cone while scraping off the excess, and the flow cone was slowly pulled upwards vertically. The flow value was measured as the diameter of the raw mortar composition spread in a circle on the aluminum plate, or in the case where the circle was distorted, the arithmetic mean of the shortest and longest diameters thereof. The flow value reflects the fluidity of the raw mortar composition, and raw mortar compositions having a high flow value tend to have suitable moldability. The results are shown in Table 1 below.

<Production of Carbon Fiber-Reinforced Mortar Structure>

The raw mortar composition according to Example 1 was arranged in a 40 mm width $\times$ 40 mm height $\times$ 160 mm length formwork, was cured in air at 20-°C for 2 days, and was then cured in water at 20-°C for 4 days to produce a mortar structure sample (cured sample) for measuring bending fracture energy.

Three-point bending measurements were performed on the obtained samples in accordance with JIS R 5201. More specifically, using a universal material testing machine (Tensilon Universal Material Testing Machine RTF2410, manufactured by A&D Company, Limited), the center of the distance between fulcrums of 10 cm was compressed at a speed of 2 mm/min. The bending strength was then calculated from the obtained maximum bending stress. The area under the bending stress-loading point displacement curve obtained when the loading point displacement was up to 4 mm was calculated and used as the bending fracture energy. The results are shown in Table 1 below.

< <Example 2> >

<Material Preparation>

(Carbon Fiber)

As the carbon fibers, the same recycled carbon fibers as in Example 1 were used, except that they were cut to an average length of 10 mm.

(Binder-Containing Liquid)

A binder-containing liquid (water emulsion sizing agent) containing 10.2 g of a urethane resin as a binder and 291 g of water as a dispersion medium was prepared.

<Granulation Treatment>

A horizontal stirring granulator (20 L Loedige mixer, manufactured by Matsubo Corporation) was used in the granulation treatment.

The stirring granulator had a stirring blade and also had an auxiliary blade to promote fiber opening.

At the same time as the start of rotation of the stirring blade, 500 g of the above recycled carbon fibers and 301 g of the above binder-containing liquid were introduced into the container part of the stirring granulator, and mixed and granulation-treated at ambient temperature for 10 minutes to obtain a spindle-shaped precursor.

The moisture content in the mixture was 36.3 wt%. The rotation speed of the stirring blade was 320 rpm, and the rotation speed of the auxiliary blade was 3,000 rpm.

(Drying Treatment)

The obtained precursor was dried in a dryer to obtain carbon fiber aggregates according to Example 2.

(Aggregates)

FIG. 4 is a photograph of the carbon fiber aggregates according to Example 2. The obtained carbon fiber aggregates had a spindle shape.

(Binder Content)

The content of the binder in the aggregates of Example 2 was 2.0 wt%.

(Average Length and Average Maximum Width)

Evaluation was carried out in the same manner as in Example 1, and the average length of the carbon fiber aggregates was 18.9 mm, and the average maximum width thereof was 1.6 mm. Since the average length of the recycled carbon fibers was 10 mm, the average length of the carbon fiber aggregates was 1.9-fold the average length of the recycled carbon fibers.

(Aspect Ratio)

From the above measured values, the aspect ratio, which was evaluated in the same manner as in Example 1, was 12.

<Production of Carbon Fiber-Containing Mortar Composition and Carbon Fiber-Reinforced Mortar Structure>

A raw mortar composition and a mortar structure were produced and evaluated in the same manner as in Example 1, except that the carbon fiber aggregates according to Example 2 were used instead of the carbon fiber aggregates according to Example 1. The results are shown in Table 1 below.

< Comparative Example 1 > >

In Comparative Example 1, the raw mortar composition and mortar structure production and evaluation were performed in the same manner as in Example 1, except that in place of the recycled carbon fiber aggregates, virgin carbon fiber bundles (24,000 single fibers per bundle, average single fiber diameter 6.8 μm, single fiber tensile strength 5.4 GPa, Weibull shape factor 4.9) cut to an average length of 10 mm were used. The results are shown in Table 1 below.

< <Reference Example 1 > >

The raw mortar composition and mortar structure production and evaluation were performed in the same manner as in Example 1, except that no carbon fibers were added and fiber reinforcement was not performed. The results are shown in Table 1 below.

The raw mortar compositions according to Examples 1 and 2 exhibited fluidity equivalent to the raw mortar composition without fiber reinforcement according to Reference Example 1, and exhibited better fluidity than the raw mortar composition according to Comparative Example 1. It is believed that the reason for this is, as compared to the cut virgin carbon fiber bundles of Comparative Example 1, the carbon fiber aggregates of Examples 1 and 2 had higher bundling power, in which the dispersion into single fibers was suppressed, to prevent the viscosity of the raw mortar composition from increasing. Furthermore, the mortar structures according to Examples 1 and 2 had higher bending strength and bending fracture energy than the mortar structures without fiber reinforcement according to Reference Example 1. Thus, by using the raw mortar compositions according to Examples 1 and 2, excellent moldability and reinforcement efficiency can simultaneously be obtained.

The mortar structure according to Example 1 had further increased bending strength and bending fracture energy as compared to the mortar structure according to Example 2, and the mortar structure according to Example 1, despite containing recycled carbon fibers, exhibited a higher bending strength and bending fracture energy than the mortar structure according to Comparative Example 1. Though not to be bound by theory, it is believed that the reason for this is, as compared to the aggregates of Example 2, the carbon fiber aggregates of Example 1 had a longer average length, thereby having a further increased securing force with the mortar, to become less likely to pull out from the mortar in response to tensile stress, whereby the reinforcing efficiency was particularly suitable.

[Table 1]

Table 1

| | Carbon fiber | | | | | Binder | Aggregates | | | | | Raw mortar composition | Mortar structure | |
|---|---|---|---|---|---|---|---|---|---|---|---|---|---|---|
| | Short fiber diameter | Short fiber tensile strength | Weibull shape factor | Residual carbon number | Cut length | Resin type | Shape | Binder amount | Length | Max width | Aspect ratio | Bundlability of carbon fibers | Flow value | Bending strength | Bending fracture energy |
| | μm | GPa | - | % | mm | - | - | % | mm | mm | - | - | mm | N/mm$^2$ | N·mm |
| Ex 1 | 6.7 | 5.3 | 7.6 | 1.4 | 15 | Polyurethane | Spindle | 2.0 | 32.8 | 0.9 | 36 | Suitable | 282 | 15.6 | 2130 |
| Ex 2 | 6.7 | 5.3 | 7.6 | 1.4 | 10 | Polyurethane | Spindle | 2.0 | 18.9 | 1.6 | 12 | Suitable | 306 | 7.9 | 826 |
| Comp Ex 1 | 6.8 | 5.4 | 4.9 | 0 | 10 | Epoxy | Non-spindle-shaped virgin carbon fiber bundles; binder amount is 2.0% | | | | | Poor | 120 | 11.9 | 549 |
| Ref Ex 1 | Carbon fibers not added; no fiber reinforcement | | | | | | | | | | | | 300 | 7.2 | 269 |

EP 4 501 881 A1

DESCRIPTION OF REFERENCE SIGNS

10    stirring granulator
12    container part
14    stirring blade
16    shaft part
A     direction of rotation
C     clearance

**Claims**

1. A carbon fiber-containing concrete or mortar composition, comprising carbon fiber aggregates each composed of at least carbon fibers and a binder, wherein
the carbon fiber aggregates have a spindle shape.

2. The carbon fiber-containing concrete or mortar composition according to claim 1, wherein an average length of the carbon fiber aggregates is 1.5 mm to 60 mm.

3. The carbon fiber-containing concrete or mortar composition according to claim 1 or 2, wherein an average maximum width of the carbon fiber aggregates is 0.1 mm to 3.0 mm.

4. The carbon fiber-containing concrete or mortar composition according to claim 1 or 2, wherein an average length of the carbon fibers is 1 mm or more and less than 30 mm.

5. The carbon fiber-containing concrete or mortar composition according to claim 4, wherein the average length of the carbon fiber aggregates is 1.2 to 5.0-fold the average length of the carbon fibers contained in the carbon fiber aggregates.

6. The carbon fiber-containing concrete or mortar composition according to claim 1 or 2, wherein a content of the binder is 0.1 to 10 wt% relative to the spindle-shaped carbon fiber aggregate.

7. The carbon fiber-containing concrete or mortar composition according to claim 1 or 2, wherein the carbon fibers include recycled carbon fibers.

8. The carbon fiber-containing concrete or mortar composition according to claim 7, wherein the carbon fibers are recycled carbon fibers.

9. The carbon fiber-containing concrete or mortar composition according to claim 7, wherein the recycled carbon fibers include a residual carbon component, and a content of the residual carbon component is greater than 0 wt% and 5.0 wt% or less relative to the recycled carbon fibers.

10. A carbon fiber-reinforced concrete or mortar structure obtained by curing the composition according to claim 1 or 2.

11. A method for the production of a carbon fiber-reinforced concrete or mortar structure, comprising:
producing spindle-shaped carbon fiber aggregates each composed of at least carbon fibers and a binder.

12. The method according to claim 11, wherein the carbon fibers include recycled carbon fibers.

13. The method according to claim 12, wherein the carbon fibers are recycled carbon fibers.

14. The method according to claim 12 or 13, comprising producing the recycled carbon fibers by decomposing a plastic component contained in a carbon fiber-containing plastic product by thermal activation of semiconductors method.

# Fig. 1

# Fig. 2

Fig. 3

Fig. 4

<div align="center">**INTERNATIONAL SEARCH REPORT**</div>

| | |
|---|---|
| | International application No. |
| | **PCT/JP2023/001182** |

| | |
|---|---|
| **A.** | **CLASSIFICATION OF SUBJECT MATTER** |

*C04B 14/38*(2006.01)i; *C04B 28/02*(2006.01)i; *B28C 5/40*(2006.01)n
FI: C04B28/02; C04B14/38 A; B28C5/40

According to International Patent Classification (IPC) or to both national classification and IPC

| | |
|---|---|
| **B.** | **FIELDS SEARCHED** |

Minimum documentation searched (classification system followed by classification symbols)

C04B7/00-C04B28/36; B28C1/00-B28C9/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 62-30008 A (MITSUBISHI CHEM. IND. LIMITED) 09 February 1987 (1987-02-09) claims, page 2, lower left column, lines 6-9, page 5, upper right column, lines 11-16, page 6, upper left column, line 12 to upper right column, line 12, page 7, upper left column, lines 2-6, upper right column, line 6 to lower left column, line 1, fig. 2a | 1-6, 10-11 |
| Y | | 7-9, 12-14 |
| Y | JP 3452363 B2 (AKZO NOBEL NAAMLOZE VENNOOTSCHAP) 29 September 2003 (2003-09-29) column 5, lines 12-27 | 1-14 |
| Y | CN 109400026 A (CHONGQING INDUSTRY POLYTECHNIC COLLEGE) 01 March 2019 (2019-03-01) paragraph [0009] | 1-14 |
| Y | JP 2013-87269 A (RES. INSTITUTE FOR PROD. DEV.) 13 May 2013 (2013-05-13) paragraphs [0003], [0024], [0061] | 7-9, 12-14 |
| Y | WO 2022/050281 A1 (TEIJIN LIMITED) 10 March 2022 (2022-03-10) paragraphs [0192]-[0194] | 9, 14 |

| | | | |
|---|---|---|---|
| ✓ Further documents are listed in the continuation of Box C. | | ✓ See patent family annex. | |

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **06 March 2023** | **20 March 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/001182**

C.     DOCUMENTS CONSIDERED TO BE RELEVANT

| Category* | Citation of document, with indication, where appropriate, of the relevant passages | Relevant to claim No. |
|---|---|---|
| X | JP 64-33037 A (ONODA CEMENT COMPANY, LIMITED) 02 February 1989 (1989-02-02) page 3, lower left column, line 12 to page 4, lower right column, line 4 | 1-6, 10-11 |
| Y | | 7-9, 12-14 |
| P, A | WO 2022/210591 A1 (TEIJIN LIMITED) 06 October 2022 (2022-10-06) | 1-14 |

Form PCT/ISA/210 (second sheet) (January 2015)

INTERNATIONAL SEARCH REPORT
Information on patent family members

International application No.

**PCT/JP2023/001182**

| Patent document cited in search report | | | Publication date (day/month/year) | Patent family member(s) | Publication date (day/month/year) |
|---|---|---|---|---|---|
| JP | 62-30008 | A | 09 February 1987 | (Family: none) | |
| JP | 3452363 | B2 | 29 September 2003 | WO 1996/004416 A1 page 3, line 27 to page 4, line 6 US 5639807 A | |
| CN | 109400026 | A | 01 March 2019 | (Family: none) | |
| JP | 2013-87269 | A | 13 May 2013 | (Family: none) | |
| WO | 2022/050281 | A1 | 10 March 2022 | (Family: none) | |
| JP | 64-33037 | A | 02 February 1989 | (Family: none) | |
| WO | 2022/210591 | A1 | 06 October 2022 | JP 2022-156823 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5046276 B
- JP 5054906 B
- JP 5182779 B
- JP 5809019 B
- JP 3452363 B
- JP 4517146 B
- JP 2019189674 A